# EUROPEAN PATENT SPECIFICATION

(11) **EP 0 441 367 B1**
(45) Date of publication and mention of the grant of the patent: **31.01.1996**
(21) Application number: 91101669.9
(22) Date of filing: 07.02.1991
(51) Int. Cl.: B01D 35/14, B01D 35/00

(54) **Oil filter for internal-combustion engines for motor vehicles**
Ölfilter für Verbrennungsmotoren für Autos
Filtre d'huile pour moteurs à combustion interne pour des automobiles

(30) Priority: 09.02.1990 IT 1933490
(43) Date of publication of application: 14.08.1991
(73) Proprietor: FIAAM FILTER S.P.A., I-46100 Mantova (IT)
(72) Inventor: Ticinesi, Claudio, I-46100 Mantova (IT)
(74) Representative: Modiano, Guido, Dr.-Ing.

(56) References cited:
- EP-A- 0 202 201
- GB-A- 1 530 835
- US-A- 3 896 280
- US-A- 4 246 109
- PATENT ABSTRACTS OF JAPAN vol. 10, no. 230 (C-365)(2286), 9 August 1986; & JP-A-61064311 (HIDEO IMAZEKI) 02.04.1986

## Description

The invention relates to an oil filter for internal-combustion engines for motor vehicles.

It is known that a widespread type of filter for the lubricating oil of internal-combustion engines mounted on motor vehicles has a filtration pack which has the shape of a hollow cylinder and is contained inside a substantially cup-shaped containment body made of sheet metal, with a head provided with connections for the inflow and outflow of oil.

The oil flows through the filtration pack by passing from the region which faces the containment body toward the inside, and leaves the impurities which it contains inside said pack, with a consequent progressive clogging of said pack.

When a certain degree of clogging of the filtration pack is reached, a bypass valve provided within the portion of space delimited by said pack opens automatically, and the oil which enters the filter no longer flows through the filtration pack but flows through the bypass valve, reaching the outlet directly.

It is evident that from the moment in which the shutter of the bypass valve leaves its sealing seat, causing the opening of the valve, the filter is inactive and therefore this circumstance must be indicated to the user, who will replace the filter.

For this purpose, the known art provides the presence of a rod which is rigidly associated with the shutter of the bypass valve and protrudes from the filter to act on a switch of an electric circuit which is connected to the electric circuit of the motor vehicle, but it is evident that the presence of said rod which protrudes from the filter is the cause of sealing problems for the oil, which is contained in the filter at substantial pressure, usually close to 20 bar.

Known from US-A-3,896,280 is an engine lubricating system incorporating a device for remotely indicating when a fluid valve element in an oil filter is in its open or closed position. As a valve element is opened or closed, a magnet operator moves towards or away from the contacts of a reed switch. When the magnet operator is sufficiently close to the switch contacts, the contacts close to energize a control circuit for a remotely located alarm. However, the device of US-A-3,896,280 compulsorily requires structural modification of an engine to support the device before installation is possible. Furthermore, the device is structurally complicated by various passageways necessary for communication with the inlet and outlet chambers of an oil filter and for providing a bypass passageway around such filter.

Also known from GB-A-1,530,835 is an oil filter as defined in the preamble of claim 1.

A principal aim of the present invention is therefore to provide a filter for the lubricating oil of internal-combustion engines for motor vehicles with improved separation of the sensor, for indicating the state of the oil filter for the user, together with its support from the oil filter.

An object of the invention is to provide an oil filter which has means for indicating the degree of clogging of the filtration pack, without the presence of said means causing oil sealing problems.

The above aim is achieved by an oil filter for internal-combustion engines for motor vehicles, as defined in the appended claims.

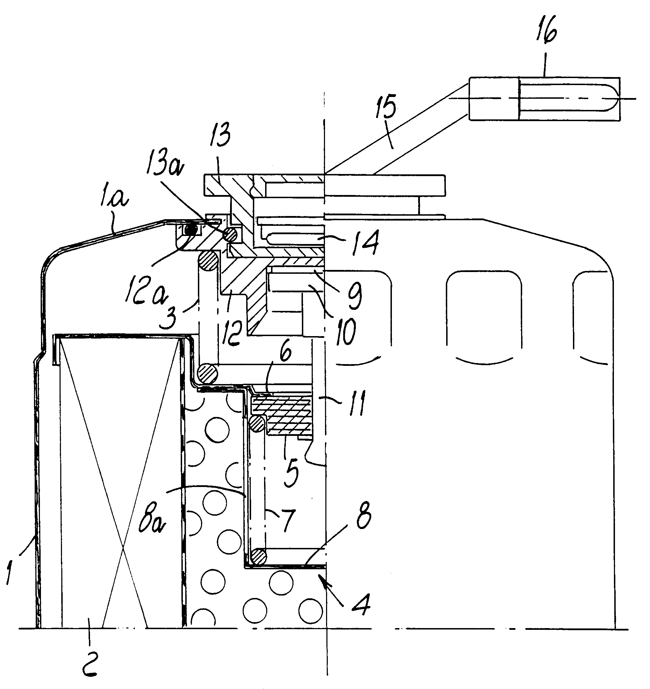

Further characteristics and advantages will become apparent form the description of a preferred but not exclusive embodiment of the invention, illustrated only by way of non-limitative example in the accompanying drawing, wherein the only figure is a longitudinal sectional view of the filter portion of interest.

With reference to the above figure, the reference numeral 1 indicates the containment body, provided with a bottom 1a, for the filtration pack 2, which is kept in place by the spring 3 and occupies a hollow cylindrical volume inside which the bypass valve, generally indicated by the reference numeral 4, is arranged.

Said valve comprises the shutter 5, which is kept in contact with the sealing seat 6 of the spring 7 which abuts on the bottom of the cup 8, with lateral openings 8a for the flow of oil.

When the filtration pack is fresh, oil enters the interspace comprised between the containment body 1 and the filtration pack 2 and flows through said pack, reaching the internal region of the filter without undergoing appreciable load losses. Oil also enters the space above the shutter 5, which does not lower since oil at a pressure which is only slightly lower than the overlying pressure and the appropriately set spring 7 act on said shutter 5.

In the course of time, the filtration pack clogs increasingly, and the load loss undergone by the oil in flowing through it is progressively higher, with a consequent decrease in the pressure of said oil below the shutter 5, whereas above said shutter the pressure is constant; at a certain point, the action of the spring 7 can no longer compensate the pressure difference between the oil below and above the shutter 5, and said shutter lowers, leaving its sealing seat 6 and allowing the oil to flow through the bypass valve without passing through the filtration pack 2.

From the moment in which the shutter 5 leaves its sealing seat 6, the filter is inactive, and thus the means which are now described, suitable for indicating this circumstance to the user, are provided.

Said means comprise, first of all, the magnet 9, accommodated in the magnet-holder 10, made of a material which is not affected by magnetic fields and is arranged at the end of the rod 11 which is rigidly associated with the shutter 5 of the bypass valve. Said magnet 9 can slide within the protrusion 12, made of a material which is not affected by magnetic fields, and is rigidly associated with the bottom 1a of the containment body 1. The bottom 1a is instead made of a material, such as steel plate, which is affected by magnetic fields, in the presence of the sealing gasket 12a.

The support 13 is adapted for being removably associated with the protrusion 12 toward the outside of the filter by virtue of the presence of the elastic ring 13a; said support contains a sensor 14, of the type known as a reed sensor, which is embedded in a resin casting and is adapted for transmitting electric pulses as a consequence of a variation of the magnetic field which affects it: the numeral 15 indeed indicates the sheath containing the wires conducting said electric pulses which reach the plug, schematically indicated by 16, which is adapted for connection to the electric circuit of the vehicle to provide a signal for the user.

The operation of the filter of the invention is evident: when the shutter 5 of the bypass valve 4 lowers, moving the magnet 9 with it when the preset degree of clogging of the filtration pack 2 is reached, the magnetic field exerted by said magnet 9 on the sensor 14 varies, and an electric pulse is emitted by said sensor and can be processed by the onboard computer of the motor vehicle in various manners so as to form a signal for the user, for example by switching on a warning light on the dashboard.

The filter which has ended its functionality is discarded after separating it from the support 13 of the sensor 14, which instead remains installed on the motor vehicle, ready to be associated with a new filter.

From what has been described, it is evident that the invention eliminates all oil sealing problems, since it does not entail the presence of any movable element which passes from the inside of the filter, where there is oil under pressure, to the outside of said filter.

The described invention is susceptible to numerous modifications and variations, all of which are within the scope of the inventive concept: thus, for example, if the containment body 1 were made of a material which is not affected by magnetic fields, the protrusion 12 could be defined monolithically in the bottom 1a of said container; the support 13 could furthermore be associated monolithically with said protrusion 12, thus renouncing its recovery upon the removal of the filter.

In the practical execution of the invention, all the details may be replaced with other technically equivalent elements; the materials employed, as well as the shapes and dimensions, may furthermore be any.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Oil filter for internal-combustion engines for motor vehicles, comprising a containment body (1) having a bottom (1a), a protrusion (12) connected to said bottom (1a) and being made of a material which is not affected by magnetic fields, said containment body (1) housing a filtration pack (2), a bypass valve (4) having a shutter (5) adapted for leaving its sealing seat (6) when the filtration pack (2) reaches a preset degree of clogging, and a magnet (9) rigidly associated with said shutter (5) and being slidable within said protrusion (12),
a support (13) installable on a motor vehicle being connected to said protrusion (12) and containing a sensor (14) for transmitting electric pulses as a consequence of magnetic field variations, said sensor (14) being connected to the electric circuit of a motor vehicle to provide an indication of the state of the oil filter for the user,
**characterized in that** said containment body (1), said bottom (1a), said protrusion (12), said filtration pack (2), said bypass valve (4), said shutter (5), said sealing seat (6), and said magnet (9) together define a single integral disposable filter member (1, 1a, 2, 4, 5, 6, 9, 12), and in that said support (13) is removably associated with said protrusion (12) towards the outside of the filter by virtue of the presence of an elastic ring (13a).

2. Oil filter according to claim 1, characterized in that it further comprises a wiring sheath (15) connected to said support (13) for connection to a motor vehicle onboard computer.

3. Oil filter according to claim 1, characterized in that said magnet (9), said magnet holder (10), said rod (11) and said shutter (5) are axially aligned with said sensor (14) and said support (13).

4. Oil filter according to claim 1, characterized in that at least a portion of said support (13) containing said sensor (14) is surrounded by said elastic ring (13a), and in that said elastic ring (13a) is surrounded by said protrusion (12).

5. Oil filter according to claim 1, characterized in that it further comprises a set spring (7) interposed between said shutter (5) and the bottom of a cup (8) containing said bypass valve (4), and a spring (3) coaxial to said set spring (7) and interposed between said protrusion (12) and said filtration pack (2).

6. Oil filter according to claim 1 further comprising a gasket (12a) interposed between said protrusion (12) and said bottom (1a) and being coaxial to said elastic ring (13a).

## Patentansprüche

1. Ölfilter für Verbrennungsmotoren für Kraftfahrzeuge, mit einem einen Boden (1a) aufweisenden Behälter (1), einem mit diesem Boden (1a) verbundenen Vorsprung (12), wobei dieser aus einem Material besteht, das durch magnetische Felder nicht beeinflußt wird, wobei der Behälter (1) ein Filterpaket (2) umfaßt, ein Umgehungs-Ventil (4) mit einem Verschluß (5), der angepaßt ist, um seinen Dichtungssitz (6) zu verlassen, wenn das Filterpaket (2) einen vorbestimmten Grad an Verstopfung erreicht, und einem mit dem Verschluß (5) fest verbundenen und innerhalb des Vorsprungs (12) verschiebbaren Magneten (9),
einer an einem Kraftfahrzeug installierbaren Stütze (13), die mit dem Vorsprung (12) verbunden ist und einen Sensor (14) zur Übertragung elektrischer Impulse als Folge von Magnetfeldschwankungen aufweist, wobei der Sensor mit dem elektrischen Schaltkreis eines Kraftfahrzeuges verbunden ist, um eine Status-Anzeige des Ölfilterzustandes für den Benutzer bereitzustellen,
**dadurch gekennzeichnet, daß** der Behälter (1), der Boden (1a), der Vorsprung (12), das Filterpaket (2), das Umgehungs-Ventil (4), der Verschluß (5), der Dichtungssitz (6) und der Magnet (9) zusammen eine einzelne zusammengehörende Einweg-Filtereinheit (1, 1a, 2, 4, 5, 6, 9, 12) bilden, und daß die Stütze (13) entfernbar mit dem Vorsprung (12) an der Außenseite des Filters mittels eines elastischen Ringes (13a) verbunden ist.

2. Ölfilter nach Anspruch 1, dadurch gekennzeichnet, daß dieser weiterhin eine mit der Stütze (13) verbundene Kabelhülse (15) zum Verbinden mit einem Kraftfahrzeug-Bord-Computer aufweist.

3. Ölfilter nach Anspruch 1, dadurch gekennzeichnet, daß der Magnet (9), der Magnethalter (10), die Stange (11) und der Verschluß (5) mit dem Sensor (14) und der Stütze (13) axial ausgerichtet sind.

4. Ölfilter nach Anspruch 1, dadurch gekennzeichnet, daß wenigstens ein Teil der den Sensor (14) aufnehmenden Stütze (13) von dem elastischen Ring (13a) umgeben ist, und daß der elastische Ring (13a) von dem Vorsprung (12) umgeben ist.

5. Ölfilter nach Anspruch 1, dadurch gekennzeichnet, daß dieser weiterhin eine Einstellfeder (7) aufweist, die zwischen dem Verschluß (5) und dem Boden eines Bechers (8) angeordnet ist, der das Umgehungs-Ventil (4) enthält, und eine koaxial zur Einstellfeder (7) und zwischen dem Vorsprung (12) und dem Filterpaket (2) angeordnete Feder (3).

6. Ölfilter nach Anspruch 1, weiterhin eine Dichtung (12a) aufweisend, die zwischen dem Vorsprung (12) und dem Boden (1a) angeordnet und koaxial zu dem elastischen Ring (13a) ist.

## Revendications

1. Filtre à huile pour moteurs à combustion interne de véhicules, comprenant un corps de confinement (1) ayant un fond (1a), une pièce en saillie (12) reliée audit fond (1a) et réalisée en une matière qui n'est pas affectée par des champs magnétiques, ledit corps de confinement (1) recevant un ensemble de filtration (2), une valve de dérivation (4) ayant un obturateur (5) adapté pour quitter son siège d'étanchéité (6) quand l'ensemble de filtration (2) atteint un degré prédéterminé d'encrassement, et un aimant (9) associé rigidement audit obturateur (5) et coulissable à l'intérieur de ladite pièce en saillie (12), un support (13) apte à être installé sur un véhicule, étant relié à ladite pièce en saillie (12) et contenant un capteur (14) pour transmettre des impulsions électriques à la suite de variations de champ magnétique, ledit capteur (14) étant relié au circuit électrique d'un véhicule pour fournir une indication de l'état du filtre à huile à l'utilisateur,
caractérisé en ce que ledit corps de confinement (1), ledit fond (1a), ladite pièce en saillie (12), ledit ensemble de filtration (2), ladite valve de dérivation (4), ledit obturateur (5), ledit siège d'étanchéité (6) et ledit aimant (9) définissent ensemble un organe de filtre unique, intégré, jetable (1,1a,2,4,5,6,9,12), et en ce que ledit support (13) est associé, de façon amovible, à ladite pièce en saillie (12) vers l'extérieur du filtre en raison de la présence d'une bague élastique (13a).

2. Filtre à huile selon la revendication 1,
caractérisé en ce qu'il comprend de plus une gaine de câblage (15), reliée audit support (13) pour la liaison à un ordinateur de bord du véhicule.

3. Filtre à huile selon la revendication 1,
caractérisé en ce que ledit aimant (9), ledit support d'aimant (10), ladite tige (11) et ledit obturateur (5) sont coaxialement alignés avec ledit capteur (14) et ledit support (13).

4. Filtre à huile selon la revendication 1,
caractérisé en ce que au moins une partie dudit support (13) contenant ledit capteur (14) est entourée par ladite bague élastique (13a), et en ce que ladite bague élastique (13a) est entourée par ladite pièce en saillie (12).

5. Filtre à huile selon la revendication 1,
caractérisé en ce qu'il comprend de plus un ressort sous contrainte (7) interposé entre ledit obturateur (5) et le fond d'une cuvette (8) contenant ladite valve de dérivation (4), et un ressort (3) coaxial audit ressort sous contrainte (7) et interposé entre ladite pièce en saillie (12) et ledit ensemble de filtration (12).

6. Filtre à huile selon la revendication 1 comprenant de plus un joint d'étanchéité (12a) disposé entre ladite pièce en saillie (12) et ledit fond (1a), et coaxial à ladite bague élastique (13a).
